# EUROPÄISCHE PATENTSCHRIFT

(11) **EP 3 162 624 B1**
(45) Veröffentlichungstag und Bekanntmachung des Hinweises auf die Patenterteilung: **08.08.2018**
(21) Anmeldenummer: 16196374.9
(22) Anmeldetag: 28.10.2016
(51) Int. Cl.: B60N 2/62, B60N 2/02

(54) **POLSTERTRÄGERPLATTE FÜR EINEN KRAFTFAHRZEUGSITZTIEFENVERSTELLER**
CUSHION SUPPORT PLATE FOR A MOTOR VEHICLE SEAT DEPTH ADJUSTER
PLAQUE DE SUPPORT REMBOURRÉE POUR UN DISPOSITIF DE RÉGLAGE DE PROFONDEUR D'ASSISE DE VÉHICULE AUTOMOBILE

(30) Priorität: 02.11.2015 DE 102015118730; 02.11.2015 DE 202015105820 U
(43) Veröffentlichungstag der Anmeldung: 03.05.2017
(73) Patentinhaber: Kokinetics GmbH, 65830 Kriftel (DE)
(72) Erfinder: OHLINGER, Joachim, 65830 Kriftel (DE)
(74) Vertreter: Patentanwälte und Rechtsanwalt Weiß, Arat & Partner mbB

(56) Entgegenhaltungen:
- DE-A1-102011 054 927
- DE-A1-102012 107 817

## Beschreibung

Die Erfindung betrifft eine Polsterträgerplatte für ein Kraftfahrzeugsitztiefenversteller nach dem Oberbegriff des Anspruchs 1.

### Stand der Technik

Aus dem Stand der Technik wird auf die DE 10 2011 054 927 A1 hingewiesen. Dort ist eine Sitztiefenverstellung für ein Fahrzeug offenbart, die aus einer Basisplatte und einer Polsterträgerplatte und einer Feder besteht, welche die Basisplatte die Polsterträgerplatte zueinander in Wirkverbindung setzt, wobei die Basisplatte eine Federsicherung umfasst. Weiter wird auf die DE 10 2012 107 817 A1 hingewiesen, welche ebenfalls eine Polsterträgerplatte für eine Sitz Tiefenverstellung mit einer Führung aufzeigt, wobei die Polsterträgerplatte und die Führung einstückig ausgebildet sind.

Aus dem Stand der Technik sind verschiedene Polsterträgerplatten für ein Kraftfahrzeugsitztiefenversteller bekannt und gebräuchlich. Nachteilig an diesen Polsterträgerplatten ist der Umstand, dass die Handhabung eines Betätigungsgriffs in der Regel problematisch ist. Zum Einen ist die Herstellung aufwendig und zum Anderen wirken durch den Aufbau der Einhakarme, in welchem die Betätigungsgriffe eingehakt werden, um sie dort teilschwenkbar zu betätigen, grosse Kräfte, die zu einer baldigen Materialermüdung führen können.

### Aufgabe der Erfindung

Aufgabe der Erfindung ist es eine Polsterträgerplatte für ein Kraftfahrzeugsitztiefenversteller zur Verfügung zu stellen, welcher eine einfache Handhabung ermöglicht und dabei eine hohe Langlebigkeit aufweist und in der Herstellung einfach und günstig herzustellen ist.

### Lösung der Aufgabe

Zur Lösung der Aufgabe führen die Merkmale nach Anspruch 1.

Eine erfindungsgemässe Polsterträgerplatte für einen Kraftfahrzeugsitztiefenversteller ist derart zu verstehen, dass bei einem Fahrzeugsitz ein Teil der Sitzfläche in Fahrtrichtung herausgeschoben werden kann, um bspw. Menschen mit längeren Oberschenkeln einen angenehmen Sitz zu ermöglichen, weil die Sitzfläche quasi bis in ihre Kniekehlen hinein vergrössert werden kann und damit eine grössere Auflagefläche zur Verfügung stellen.

Diese Polsterträgerplatte weist eine Polsterplatte auf. Die Polsterplatte dient der Aufnahme eines Sitzpolsters und weist eine erste und eine zweite Fläche auf. Die erste Fläche ist mit Verbindungselementen zur Aufnahme eines Sitzpolsters ausgelegt. Die zweite Fläche ist andernseits der ersten Fläche an der Polsterplatte angeordnet und weist in der Regel Funktionselemente und Verbindungselemente für Antriebe od. dgl. auf. Die Polsterträgerplatte weist ausserdem eine erste Abschlusslinie und eine zweite Abschlusslinie auf, welche durch zwei Stege miteinander verbunden sind. Die erste Abschlusslinie ist die einer Fahrzeuglehne zugewandte Seite. Die erste Abschlusslinie ist im Wesentlichen gerade bzw. linienförmig ausgebildet. Die zweite Abschlusslinie ist die der Fahrzeuglehne abgewandte Seite der Polsterträgerplatte. Die zweite Abschlusslinie ist im Wesentlichen bogenförmig ausgebildet. Die beiden Stege sind im Wesentlichen rechtwinklig zu der ersten Abschlusslinie und der zweite Abschlusslinie angeordnet.

Ausserdem weist die Polsterplatte ein Stabilisierungsgerippe im Wesentlichen aus Sechsecken oder Teilsechsecken auf. Diese Stabilisierungsgerippe ermöglicht eine Gewichtsersparnis bei der Herstellung der Polsterplatte aus Kunststoff, wobei trotzdem eine hohe Festigkeit und Lebensdauer erreicht werden kann. Die Auswahl von Sechsecken und Teilsechsecken richtet sich nach der Grösse der Polsterplatte und den auf der Polsterplatte anzubringenden Befestigungselementen bspw. für das Sitzpolster.

Die Polsterplatte weist ausserdem auf der zweiten Fläche zwei Einhakarme auf, welche im Wesentlichen rechtwinklig von der zweiten Fläche abragen. Abragen bedeutet hierbei, dass sie von der zweiten Flächen und andernseits der ersten Fläche wegragen zu einem Fahrzeuguntergrund hin.

Die beiden Einhakarme bestehen hierbei aus einem ersten Abschnitt und einem zweiten Abschnitt, wobei der erste Abschnitt einends mit der zweiten Flächen verbunden ist und andernends den zweiten Abschnitt ausbildet. Der zweite Abschnitt wiederum bildet eine Aufnahme aus, welcher für einen Stift eines Betätigungsgriffs vorgesehen ist. Der Betätigungsgriff wird mit entsprechenden Stiften in die Aufnahme eingesetzt bzw. in der Aufnahme festgelegt.

Erfindungsgemäss ist im Wesentlichen, dass der zweite Abschnitt zu dem ersten Abschnitt versetzt parallel angeordnet ist, wobei zwischen dem ersten Abschnitt und dem zweiten Abschnitt ein Versatzstück vorhanden ist. Das Versatzstück bewirkt, dass der Verlauf des ersten Abschnitts zu dem zweiten Abschnitt versetzt dargestellt ist. Es bildet sich eine S-Form, wobei der zweite Abschnitt versetzt parallel zu dem ersten Abschnitt verläuft. Der zweite Abschnitt wird hierbei durch das Versatzstück nicht aus dem Gesamtumfang der Polsterträgerplatte heraus versetzt.

Ausserdem weisen die Aufnahmen je einen zu der ersten Abschlusslinie hin geöffneten Einlass auf. Der Einlass dient dem einfacheren Einbringen der Stifte des Betätigungsgriffs in die Aufnahme. Der Einlass kann hierbei derart konisch ausgebildet sein, dass der zu der ersten Abschlusslinie hin angeordnete Bereich des Einlasses einen grösseren Aufnahmebereich ausbildet und anschliessend verjüngend zu einer Pförtnerklemmung hin verläuft, wobei die Pförtnerklemmung aus Festlegeelementen besteht, welche die Stifte des Betätigungsgriffs gegen eine definierte Kraft überwinden müssen, um anschliessend in einem Drehraum aufgenommen zu werden. In dem Drehraum wiederum können die Stifte frei gedreht werden, um die Betätigung des Griffes zu erleichtern. Das versetzte Anbringen des zweiten Abschnitts zu einer Fahrzeugfront hin weist den Vorteil auf, dass der Nutzer nicht mehr soweit nach unten in den Fahrzeuginnenraum und unter den Sitz greifen muss, sondern auf einfache Art und Weise den Griff betätigen kann.

Die beiden Einhakarme sind dabei parallel von der zweiten Fläche abragend angeordnet. Sie sind hierbei insbesondere parallel zueinander angeordnet. Sie weisen ausserdem eine offene Struktur zueinander auf. Das heisst sie sind offen zueinander ausgebildet. In erster Linie bedeutet das, dass die Aufnahme und die dort vorgesehenen Einlässe, Pförtnerklemmung und Drehräume keine Seitenwandung zu dem jeweils anderen Einhakarm aufweisen, so dass ein Betätigungsgriff mit seinen Stiften ohne Weiteres zwischen den beiden Einhakarmen angeordnet und betätigt werden kann.

### FIGURENBESCHREIBUNG

Weitere Vorteile, Merkmale und Einzelheiten der Erfindung ergeben sich aus der nachfolgenden Beschreibung der Figuren. Dort zeigt
Figur 1 eine seitliche Draufsicht auf eine erfindungsgemässe Polsterträgerplatte;
Figur 2 eine Seitenansicht der erfindungsgemässen Polsterträgerplatte nach Figur 1;
Figur 3 eine geschnittene Seitenansicht eines Teils der erfindungsgemässen Polsterträgerplatte nach Figur 1.

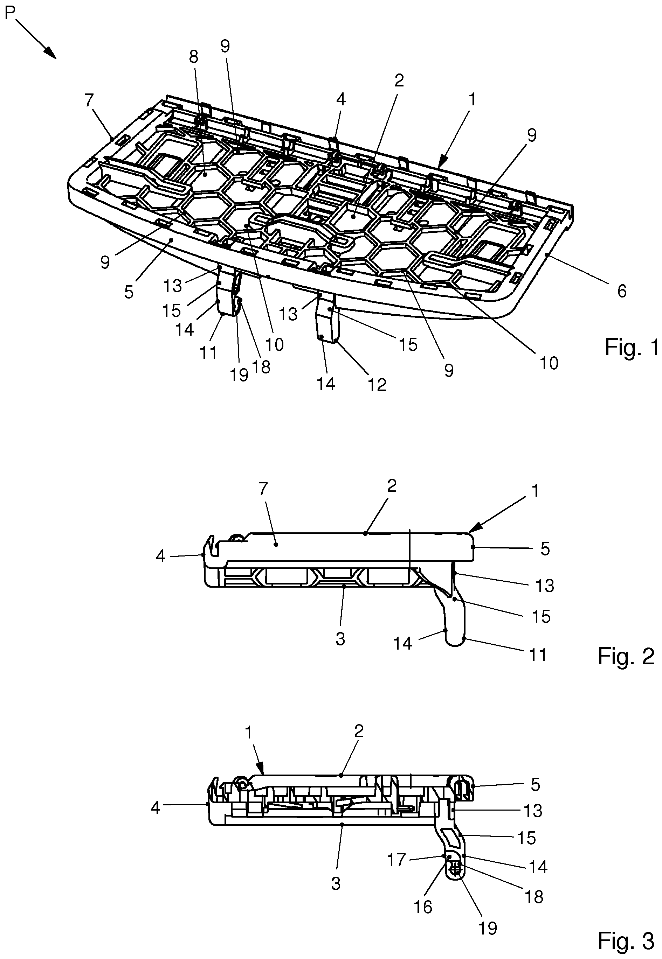

In der Figur 1 ist eine Polsterträgerplatte P gezeigt. Diese Polsterträgerplatte P weist eine Polsterplatte 1 auf. Die Polsterplatte 1 weist eine erste Fläche zur Aufnahme eines nicht gezeigten Sitzpolters und eine zweite Fläche für die Anordnung von Funktionselementen auf. Die erste Fläche ist gut in der Figur zu erkennen. Die zweite Fläche ist besser in den Figuren 2 und 3 gezeigt. Weiter ist in Figur 1 eine erste Abschlusslinie 4 gezeigt, die im Wesentlichen gerade ausgebildet ist und zu einer nicht gezeigten Fahrzeuglehne hin angeordnet ist. Ausserdem ist eine zweite Abschlusslinie 5 zu erkennen, welche im Wesentlichen bogenförmig ausgebildet ist und von der nicht gezeigten Fahrzeuglehne abgeneigt bzw. abgewandt angeordnet ist.

Die erste Abschlusslinie 4 und die zweite Abschlusslinie 5 ist über zwei Stege 6, 7 miteinander verbunden, wobei die Polsterplatte 1 ein Stabilisierungsgerippe 8 aufweist. Das Stabilisierungsgerippe 8 ist im Wesentlichen aus Sechsecken 9 oder Teilsechsecken 10 gebildet.

Die zweite Fläche zwei weist zwei Einhakarme 11, 12 auf, welche im Wesentlichen rechtwinklig von der zweiten Fläche abragen. Die zwei Einhakarme 11, 12 bestehen aus einem ersten Abschnitt 13 und einem zweiten Abschnitt 14, welche besser in der Figur 3 zu erkenn sind. Zwischen dem ersten Abschnitt 13 und dem zweiten Abschnitt 14 ist ein Versatzstück 15 angeordnet.

Ausserdem ist in der Figur 3 gezeigt, wie eine Aufnahme 16 einen Einlass 17 aufweist, welcher leicht verjüngend um eine Krümmung zu einer Pförtnerklemmung 18 hin verläuft. Die Pförtnerklemmung 18 besteht aus zwei Kunststoffrippen, welche von den Stiften des Betätigungsgriffes überwunden werden müssen, um anschliessend ein freien Drehen der Stifte des Betätigungsriffs im Drehraum 19 zu ermöglichen.

In Figur 1 ist ausserdem an dem Einhakarm 11 gut zu erkennen, wie die Aufnahme 16, der Einlass 17, die Pförtnerklemmung 18 und der Drehraum 19 zu dem Einhakarm 12 offen ausgebildet ist. In diesem hier gezeigten Ausführungsbeispiel ist auch das Versatzstück offen ausbildet. Dies ist aber nicht zwingend, sondern lediglich ein Ausführungsbeispiel.

**Bezugszeichenliste**

| | | | | | |
|---|---|---|---|---|---|
| 1 | Polsterplatte | 34 | | 67 | |
| 2 | Erste Fläche | 35 | | 68 | |
| 3 | Zweite Fläche | 36 | | 69 | |
| 4 | Erste .Abschlusslinie | 37 | | 70 | |
| 5 | Zweite Abschlusslinie | 38 | | 71 | |
| 6 | Steg | 39 | | 72 | |
| 7 | Steg | 40 | | 73 | |
| 8 | Stabilisierungsgerippe | 41 | | 74 | |
| 9 | Sechseck | 42 | | 75 | |
| 10 | Teilsechseck | 43 | | 76 | |
| 11 | Einhakarm | 44 | | 77 | |
| 12 | Einhakarm | 45 | | 78 | |
| 13 | Erster Abschnitt | 46 | | 79 | |
| 14 | Zweiter Abschnitt | 47 | | | |
| 15 | Versatzstück | 48 | | | |
| 16 | Aufnahme | 49 | | | |
| 17 | Einlass | 50 | | | |
| 18 | Pförtnerklemmung | 51 | | | |
| 19 | Drehraum | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Polsterträgerplatte (P) für einen Kraftfahrzeugsitztiefenversteller mit einer Polsterplatte (1), wobei die Polsterplatte (1) eine erste Fläche (2) zur Aufnahme eines Sitzpolsters und eine zweite Fläche (3) mit Funktionselementen aufweist und die zweite Fläche (3) andererseits der ersten Fläche (2) der Polsterplatte befindlich ist, wobei eine einer Fahrzeuglehne zugewandte erster Abschlusslinie (4) im Wesentlichen gerade ausgebildet ist und eine der Fahrzeuglehne abgewandte zweite Abschlusslinie (5) bogenförmig ausgebildet ist, und die erste Abschlusslinie (4) und die zweite Abschlusslinie (5) mit zwei Stegen (6, 7) miteinander verbunden sind, wobei die Polsterplatte (1) ein Stabilisierungsgerippe (8) im Wesentlichen aus Sechsecken (9) oder Teilsechsecken (10) aufweist, wobei von der zweiten Fläche (2) zwei Einhakarme (11, 12) im Wesentlichen rechtwinklig abragen, wobei die zwei Einhakarme (11, 12) aus einem ersten Abschnitt (13) und einem zweiten Abschnitt (14) bestehen, wobei der erste Abschnitt (13) einends mit der zweiten Fläche (3) verbunden ist und andernends den zweiten Abschnitt (14) ausbildet, wobei der zweite Abschnitt (14) der Einhakarme (11, 12) je eine Aufnahme (16) für Stifte eines Betätigungsgriffes aufweisen, wobei der zweite Abschnitt (14) zu dem ersten Abschnitt (13) versetzt parallel angeordnet ist, wobei zwischen dem ersten Abschnitt (13) und dem zweiten Abschnitt (14) ein Versatzstück (15) vorhanden ist
**dadurch gekennzeichnet,**
**dass** die Aufnahmen (16) je eine Pförtnerklemmung (18) und einen Drehraum (19) aufweisen, wobei die beiden Einhakarme (11, 12) parallel von der zweiten Fläche (3) abragend angeordnet sind, wobei die Aufnahmen (16) der beiden Einhakarme (11, 12) und die in der Aufnahme (16) vorgesehenen Einlasse (17), Pförtnerklemmungen (18) und Drehräume (19) offen zueinander ausgebildet sind.

2. Polsterträgerplatte nach Anspruch 1, **dadurch gekennzeichnet, dass** die Aufnahmen (16) je einen zu der ersten Abschlusslinie (4) hin geöffneten Einlass (17) aufweisen.

## Claims

1. A cushion support plate (P) for a motor-vehicle seat depth adjuster with a cushion plate (1), wherein the cushion plate (1) has a first face (2) for receiving a seat cushion and a second face (3) with functional elements, and the second face (3) is located on the other side from the first face (2) of the cushion plate, wherein a first closure line (4) which faces a vehicle backrest is formed substantially straight and a second closure line (5) which faces away from the vehicle backrest is formed arcuate, and the first closure line (4) and the second closure line (5) are connected together by two crosspieces (6, 7), wherein the cushion plate (1) has a stabilising rib structure (8) substantially consisting of hexagons (9) or partial hexagons (10), wherein two hook-in arms (11, 12) protrude substantially at right-angles from the second face (2), wherein the two hook-in arms (11, 12) consist of a first portion (13) and a second portion (14), wherein the first portion (13) is connected at one end to the second face (3) and at the other end forms the second portion (14), wherein the second portion (14) of the hook-in arms (11, 12) have one receptacle (16) in each case for pins of an actuating handle, wherein the second portion (14) is arranged offset parallel to the first portion (13), wherein an offset piece (15) is present between the first portion (13) and the second portion (14)
**characterised in that**
the receptacles (16) have in each case one gatekeeper clamp (18) and a rotation space (19), wherein the two hook-in arms (11, 12) are arranged protruding parallel from the second face (3), wherein the receptacles (16) of the two hook-in arms (11, 12) and the inlets (17), gatekeeper clamp (18) and rotation spaces (19) provided in the receptacle (16) are designed to be open relative to each other.

2. A cushion support plate according to Claim 1, **characterised in that** the receptacles (16) have in each case one inlet (17) which is opened towards the first closure line (4).

## Revendications

1. Plaque de support rembourrée (P) pour un dispositif de réglage de profondeur d'assise de véhicule automobile avec une plaque rembourrée (1), dans laquelle la plaque rembourrée (1) présente une première face (2) destinée à recevoir un rembourrage d'assise et une deuxième face (3) avec des éléments fonctionnels, dans laquelle la deuxième face (3) se trouve de l'autre côté de la première face (2) de la plaque rembourrée, dans laquelle une première ligne de terminaison (4) orientée vers un dossier de véhicule est réalisée sensiblement rectiligne et une deuxième ligne de terminaison (5) opposée au dossier de véhicule est réalisée arquée, et la première ligne de terminaison (4) et la deuxième ligne de terminaison (5) sont connectées entre elles par deux bretelles (6, 7), dans laquelle la plaque rembourrée (1) présente une armature de stabilisation (8) composée substantiellement d'hexagones (9) ou d'hexagones partiels (10), dans laquelle ressortent de la deuxième face (2) sensiblement à angle droit deux bras d'accrochage (11, 12), les deux bras d'accrochage (11, 12) étant constitués d'un premier segment (13) et d'un deuxième segment (14), le premier segment (13) étant connecté, à une extrémité, à la deuxième face (3) et constituant, à l'autre extrémité, le deuxième segment (14), dans laquelle le deuxième segment (14) des bras d'accrochage (11, 12) présente, chacun, un réceptacle (16) pour des goupilles d'une poignée d'actionnement, le deuxième segment (14) étant disposé parallèle au et décalé par rapport au premier segment (13), dans laquelle est présente, entre le premier segment (13) et le deuxième segment (14), une pièce de décalage (15),
**caractérisée par le fait**
**que** les réceptacles (16) présentent, chacun, une bride de serrage (18) et un espace de rotation (19), les deux bras d'accrochage (11, 12) étant disposés de manière à ressortir en parallèle de la deuxième face (3), les réceptacles (16) des deux bras d'accrochage (11, 12) et les entrées (17), les brides de serrage (18) et les espaces de rotation (19) prévus dans le réceptacle (16) étant réalisés ouverts l'un vers l'autre.

2. Plaque de support rembourrée selon la revendication 1, **caractérisée par le fait que** les réceptacles (16) présentent, chacun, une entrée (17) ouverte vers la première ligne de terminaison (4).
